# EUROPEAN PATENT APPLICATION

(11) **EP 2 056 513 A2**
(43) Date of publication of application: **06.05.2009**
(21) Application number: 08167828.6
(22) Date of filing: 29.10.2008
(51) Int. Cl.: H04L 1/18

(54) **Method of data transmission using HARQ**

(30) Priority: 29.10.2007 US 983236; 07.01.2008 KR 20080001946
(71) Applicant: LG Electronics Inc., Seoul 150-721 (KR)
(72) Inventor: Kim, Bong Hoe, Anyang-si, 431-749, Gyeonggi-do (KR); Roh, Dong Wook, Anyang-si, 431-749, Gyeonggi-do (KR); Ahn, Joon Kui, Anyang-si, 431-749, Gyeonggi-do (KR); Seo, Dong Youn, Anyang-si, 431-749, Gyeonggi-do (KR); Kim, Hak Seong, Anyang-si, 431-749, Gyeonggi-do (KR); Park, Hyun Wook, Anyang-si, 431-749, Gyeonggi-do (KR); Lee, Dae Won, Anyang-si, 431-749, Gyeonggi-do (KR)
(74) Representative: Cabinet Plasseraud

(57) **Abstract**

A method of transmitting data from a user terminal to a base station using a hybrid automatic repeat request (HARQ) scheme with a plurality of redundancy versions of said data, each of the redundancy versions (RV) indicating a transmission start position of a data block in a circular buffer. The method comprising, carried out in the user terminal:
performing a first transmission of the data using the HARQ scheme with a first redundancy version (RV0); and
performing at least one retransmission of the data using the HARQ scheme with various redundancy versions.

Wherein the method further comprises, for each retransmission, determining the redundancy version to be used by considering the previously used redundancy version and a predetermined sequence, and wherein within one sequence, at least two redundancy versions following each other have non consecutive start positions.

## Description

The present invention relates to wireless communications, and more particularly, to a method of data transmission using hybrid automatic repeat request (HARQ).

An error correction scheme is used to secure communication reliability. Examples of the error correction scheme include a forward error correction (FEC) scheme and an automatic repeat request (ARQ) scheme. In the FEC scheme, a transmitter encodes information bits by using an extra error correction code and then transmits the information bits. A receiver demodulates received signals, then decodes the error correction code, and then restores the transmitted information. According to the decoding process, received signal errors can be corrected. In the ARQ scheme, on the contrary, the transmitter corrects errors by retransmitting data. Examples of the ARQ scheme include stop and wait (SAW), go-back-N (GBN), selective repeat (SR), etc.

A turbo code is a type of the error correction code. The turbo code consists of a recursive systematic convolution encoder and an interleaver. A quadratic polynomial permutation (QPP) interleaver is an example of an interleaver that is used to facilitate parallel decoding when the turbo code is implemented in practice. It is known that the QPP interleaver maintains a good performance only when a data block has a specific size. The larger the data block size, the better the performance of the turbo code. However, to facilitate implementation in practice, when a data block has a size larger than a specific size in an actual communication system, encoding is performed by dividing the data block into several small data blocks.

The divided small data blocks are referred to as code blocks. In general, the code blocks have the same size. However, due to a size limit in the QPP interleaver, among a plurality of code blocks, one or more code blocks may have different sizes. The purpose of performing interleaving is to reduce an influence of burst errors which occurs when data is transmitted through a wireless channel. The interleaved data is mapped to an actual radio resource when transmitted. A constant amount of radio resources are used when transmission is made in practice. Accordingly, an encoded code block needs to undergo rate matching. In general, the rate matching is achieved with puncturing or repetition. The rate matching may be performed in a unit of a code block which is encoded similarly to a wideband code division multiple access (WCDMA) of the 3^{rd} generation partnership project (3GPP).

The FEC scheme has an advantage in that a time delay is small and in that information to be exchanged between transmitting/receiving ends is not required. However, the FEC scheme has a disadvantage in that system efficiency deteriorates in a good channel environment. Transmission reliability can be improved using the ARQ scheme. However, the ARQ scheme has a disadvantage in that a time delay occurs and in that system efficiency deteriorates in a poor channel environment. To solve such disadvantages, a hybrid automatic repeat request (HARQ) scheme is proposed by combining the FEC and the ARQ. According to the HARQ scheme, whether unrecoverable errors are included in data received by a physical layer is determined, and retransmission is requested when an error occurs, thereby improving performance.

A HARQ-based retransmission scheme can be classified into a synchronous HARQ and an asynchronous HARQ. The synchronous HARQ is a scheme in which data is retransmitted at a time point known to a transmitter and a receiver. In the synchronous HARQ, signaling such as a HARQ processor number can be omitted. The asynchronous HARQ is a scheme in which resources for retransmission are allocated at an arbitrary time point. In the asynchronous HARQ, an overhead occurs due to an extra signaling.

According to a transmission attribute, the HARQ can be classified into an adaptive HARQ and a non-adaptive HARQ. The transmission attribute includes resource allocation, a modulation scheme, a transport block size, etc. In the adaptive HARQ, depending on changes in a channel condition, transmission attributes are entirely or partially changed. In the non-adaptive HARQ, the transmission attributes used for the first transmission are persistently used irrespective of the changes in the channel condition.

When no error is detected from received data, the receiver transmits an acknowledgement (ACK) signal as a response signal and thus informs the transmitter of successful reception. When an error is detected from the received data, the receiver transmits a negative-acknowledgement (NACK) signal as the response signal, and thus informs the transmitter of error detection. The transmitter can retransmit the data upon receiving the NACK signal.

A HARQ-based receiver basically attempts error correction of the received data, and determines whether to perform retransmission by using an error detection code. The error detection code may be a cyclic redundancy check (CRC). When an error is detected from the received data through a CRC detection procedure, the receiver transmits the NACK signal to the transmitter. Upon receiving the NACK signal, the transmitter transmits suitable retransmission data according to a HARQ mode (i.e., a chase combining mode or an incremental redundancy (IR) mode).

According to a redundancy version (RV) indicating a characteristic of a retransmitted data block, the HARQ mode can be classified into the chase combining mode and the IR mode. In the chase combining mode, to obtain a signal-to-noise ratio (SNR), error-detected data is combined with retransmitted data instead of discarding the error-detected data. In the IR mode, additional redundant information is incrementally transmitted with retransmitted data to obtain a coding gain and to reduce an overhead resulted from retransmission.

When circular buffer rate matching is used in the IR mode, the RV generally indicates a transmission start position of a data block transmitted or retransmitted from a circular buffer. That is, a specific number of transmission start positions have to be defined in the circular buffer, wherein the specific number is equal to the number of RVs. Retransmission is required when a channel condition is poor. It is not desired to use the coding rate, modulation scheme, and resource allocation, which are used in the first transmission, without alternation whenever data is retransmitted. This is because a channel condition changed when the data is retransmitted cannot be properly taken into consideration. Therefore, if the coding rate or modulation scheme changes over time, there is a need for a method of transmitting data, whereby an error correction rate is increased by adaptively selecting a transmission start position of data.

The present invention provides a method of data transmission using hybrid automatic repeat request (HARQ) for increasing an error correction rate by effectively selecting a redundancy version.

The present invention also provides a method of transmitting data using a predetermined redundancy version according to a transmission number in a synchronous HARQ.

According to an embodiment of the present invention a method of transmitting data from a user terminal to a base station is described. This method uses a hybrid automatic repeat request (HARQ) scheme with a plurality of redundancy versions of said data, each of the redundancy versions (RV) indicating a transmission start position of a data block in a circular buffer. The method comprises, carried out in the user terminal performing a first transmission of the data using the HARQ scheme with a first redundancy version, performing at least one retransmission of the data using the HARQ scheme with various redundancy versions, and for each retransmission, determining the redundancy version to be used by considering the previously used redundancy version and a predetermined sequence. Within one sequence, at least two redundancy versions following each other have non consecutive start positions.

In one embodiment, said sequence is cyclically used to perform repeated retransmissions.

Advantageously, the plurality of redundancy versions comprises four redundancy versions with respectively four different start positions in the circular buffer.

In one embodiment said sequence is formed of redundancy versions set in the following order, considering their start positions: the first, the third, the fourth and the second redundancy version.

Alternatively, the redundancy version with the first start position is used only for the first transmission and the retransmissions are performed using a sequence formed of redundancy versions set in the following order, considering their start positions: the third, the fourth and the second redundancy version.

In one embodiment, one redundancy version is specifically used for the first transmission.

Advantageously, the redundancy versions have all the same size and have start positions equidistantly separated in the circular buffer.

In another embodiment, the method further comprises, carried out in the user terminal receiving scheduling information from the base station, selecting a redundancy version based on the scheduling information, performing a transmission with the selected redundancy version and performing further retransmissions of the data using redundancy versions by considering the selected redundancy version and the predetermined sequence.

Advantageously, the scheduling information comprises an indicator of the redundancy version to be selected.

Alternatively, the scheduling information comprises an indicator of the current communication situation and a redundancy version with a start position immediately next to the start position of the last redundancy version transmitted is selected.

In yet another embodiment, the scheduling information comprises a new data indicator (NDI) and, upon reception, the user terminal performs a first transmission.

The invention also relates to a corresponding user terminal, a base station and a communication system.

Efficiency of hybrid automatic repeat request (HARQ) can be increased even if scheduling information is not provided. Data of a circular buffer is transmitted as fast as possible, thus a data transfer throughput can be improved. In addition, efficiency of uplink transmission using a synchronous HARQ can be increased.

FIG. 1 shows a wireless communication system.

FIG. 2 is a block diagram showing a channel encoding procedure.

FIG. 3 shows a transmission start position according to a redundancy version (RV) in a system using rate matching in a circular buffer.

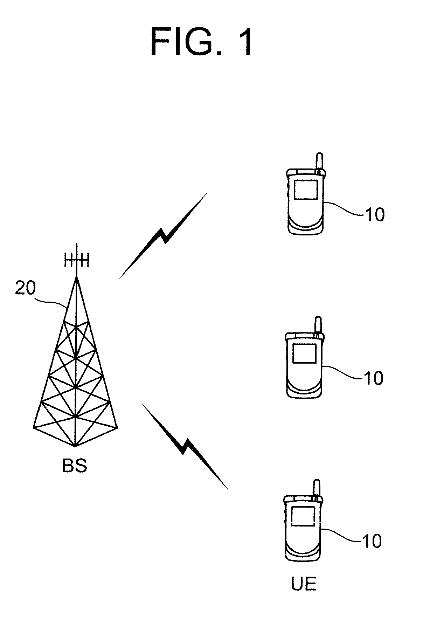

FIG. 1 shows a wireless communication system. The wireless communication system can be widely deployed to provide a variety of communication services, such as voices, packet data, etc.

Referring to FIG. 1, the wireless communication system includes a base station (BS) 20 and at least one user equipment (UE) 10. The UE 10 may be fixed or mobile, and may be referred to as another terminology, such as a mobile station (MS), a user terminal (UT), a subscriber station (SS), a wireless device, etc. The BS 20 is generally a fixed station that communicates with the UE 10 and may be referred to as another terminology, such as a node-B, a base transceiver system (BTS), an access point, etc. There are one or more cells within the coverage of the BS 20.

A downlink represents a communication link from the BS 20 to the UE 10, and an uplink represents a communication link from the UE 10 to the BS 20. In the downlink, a transmitter may be a part of the BS 20, and a receiver may be a part of the UE 10. In the uplink, the transmitter may be a part of the UE 10, and the receiver may be a part of the BS 20.

Downlink and uplink transmissions can be made using different multiple access schemes. For example, orthogonal frequency division multiple access (OFDMA) may be used for downlink transmission, and single carrier-frequency division multiple access (SC-FDMA) may be used for uplink transmission.

There is no restriction on the multiple access schemes used in the wireless communication system. The multiple access schemes may be based on code division multiple access (CDMA), time division multiple access (TDMA), frequency division multiple access (FDMA), single-carrier FDMA (SC-FDMA), orthogonal frequency division multiple access (OFDMA), or other well-known modulation schemes. In these modulation schemes, signals received from multiple users are demodulated to increase capacity of the communication system. For clarity, the OFDMA-based wireless communication system will be described hereinafter.

The OFDM scheme uses a plurality of orthogonal subcarriers. Further, the OFDM scheme uses orthogonality between inverse fast Fourier transform (IFFT) and fast Fourier transform (FFT). The transmitter transmits data by performing IFFT. The receiver restores original data by performing FFT on a received signal. The transmitter uses IFFT to combine the plurality of subcarriers, and the receiver uses FFT to split the plurality of subcarriers. According to the OFDM scheme, complexity of the receiver can be reduced in a frequency selective fading environment of a broadband channel, and the spectral efficiency can be improved through selective scheduling in a frequency domain by utilizing channel characteristics which are different from one subcarrier to another. An OFDMA scheme is an OFDM-based multiple access scheme. According to the OFDMA scheme, a radio resource can be more efficiently used by allocating different subcarriers to multiple users.

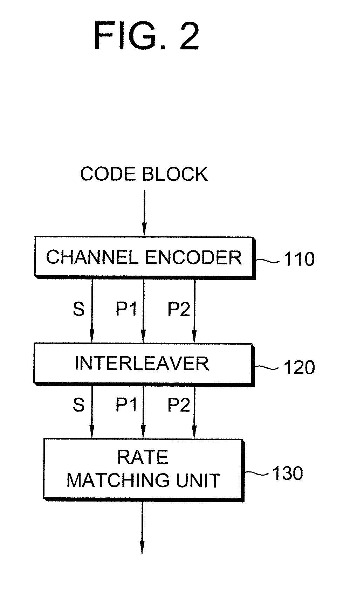

FIG. 2 is a block diagram showing a channel encoding procedure. This is a case where one code block is transmitted in a format of a plurality of data streams after channel encoding, interleaving, and rate matching. The code block is a specific-sized data block for performing channel encoding. A plurality of code blocks may have the same size or may have different sizes.

Referring to FIG. 2, a channel encoder 110 performs channel encoding on an input code block. The channel encoder 110 may use a turbo code. The turbo code consists of a recursive systematic convolution encoder and an interleaver. The turbo code generates systematic bits and parity bits on a bit-basis from the input code block. It is assumed herein that, by using a 1/3 code rate, one systematic block S and two parity blocks P1 and P2 are generated. The systematic block is a set of systematic bits. The parity block is a set of parity bits.

An interleaver 120 performs interleaving on the channel-encoded code block so as to reduce an influence of a burst error. The interleaver 120 can perform interleaving for the systematic block S and the two parity blocks P1 and P2.

A rate matching unit 130 matches the channel-encoded code block to fit a size of a radio resource. The rate matching can be performed in a unit of a channel-encoded code block. Alternatively, the rate matching can be performed by separating the two parity blocks P2 and P2.

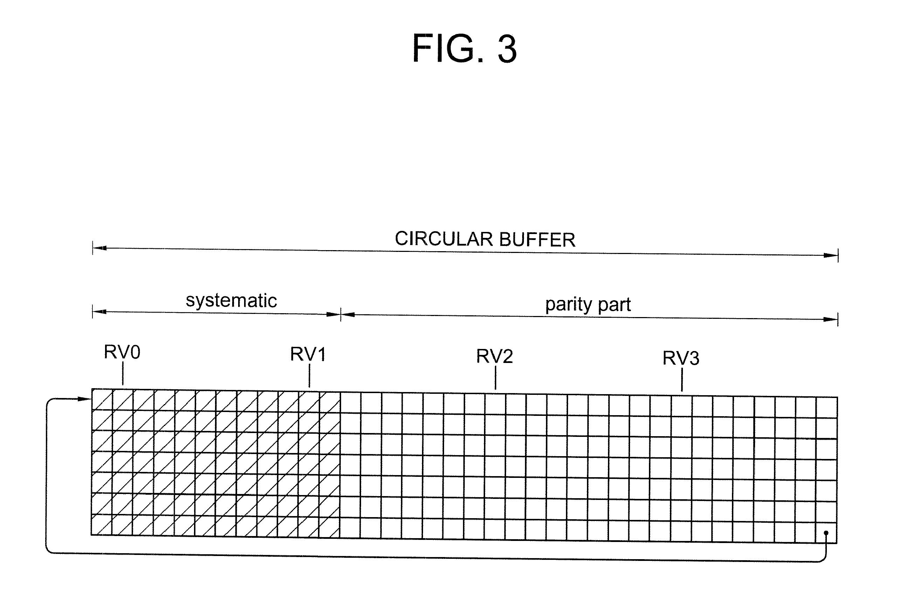

FIG. 3 shows a transmission start position according to a redundancy version (RV) in a system using rate matching in a circular buffer. It will be assumed herein that a coding rate of a turbo code is 1/3, and a scheduling entity for data transmission exists in a receiver. That is, when the receiver transmits to a transmitter a data transport format and resource indicator (TFRI) that is an indicator for indicating resources and a transport format of data to be transmitted by the transmitter, the transmitter transmits data according to the TFRI. Hereinafter, a redundancy version will be simply referred to as an RV.

Referring to FIG. 3, a circular buffer horizontally consists of 36 logical data blocks. Among them, 1/3 parts of the logical data blocks (i.e., 12 data blocks) are systematic blocks, and subsequent 2/3 parts of the logical data blocks (i.e., 24 data blocks) are parity blocks. There are four RVs, that is, RV0 to RV3. An interval between RVs is obtained by dividing a total circular buffer size by the number of RVs. The RV is determined upon failure in data transmission using hybrid automatic repeat request (HARQ) . A transmission or retransmission start position of a data block changes according to the RV.

The RV0 to RV3 are redundancy versions indicating different transmission or retransmission start positions. In case of a 0^{th} redundancy version (hereinafter, RV0), transmission is made starting from a 2^{nd} data block in the circular buffer. In case of a 1^{st} redundancy version (hereinafter, RV1), transmission is made starting from an 11^{th} data block in the circular buffer. In case of a 2^{nd} redundancy version (hereinafter, RV2), transmission is made starting from a 20^{th} data block. In case of a 3^{rd} redundancy version (hereinafter, RV3), transmission is made starting from a 29^{th} data block.

It has been assumed herein that the coding rate of the turbo code is 1/3, and the number of RVs is 4. However, this is for exemplary purposes only, and thus a different coding rate, a different number of RVs, and a different RV start position may be used in the present invention.

Scheduling information (e.g., a scheduling grant) for first transmission must be transmitted. Scheduling information for retransmission is optionally transmitted. For a case where there is no scheduling information for retransmission, an RV to be used in transmission needs to be independently defined by the user terminal.

Hereinafter, a method of retransmitting data by adaptively selecting an RV in a HARQ process will be described.

For example, data can be transmitted using the HARQ by determining a fixed RV to be used for first transmission and retransmission of data in a circular buffer irrespective of a coding rate. As shown in FIG. 3, the entire circular buffer may be divided into a constant number of data blocks to determine a fixed transmission start position of RV. In this case, a throughput can be improved when it is determined to transmit data of the circular buffer as fast as possible.

If a total size of the circular buffer of FIG. 3 is 4, a portion occupied by the circular buffer according to the coding rate is as shown in Table 1 below.

**[Table 1]**

| coding rate | portion |
|---|---|
| 2/3≤ coding rate ≤1 | 1<portion<2 |
| 4/9≤ coding rate ≤2/3 | 2<portion<3 |
| 1/3≤ coding rate ≤4/9 | 3<portion<4 |

Referring to Table 1, when the coding rate is above 2/3 and below 1, all data blocks in the entire circular buffer can be transmitted by performing 4 times of transmissions. When the coding rate is above 4/9 and below 2/3, all data blocks in the entire circular buffer can be transmitted by performing 2 times of transmissions. When the coding rate is above 1/3 and below 4/9, all data blocks in the entire circular buffer can be transmitted by performing 2 times of transmissions.

Accordingly, a set of fixed RVs to be used in respective transmissions can be selected as shown in Table 2 irrespective of the coding rate. It will be assumed herein that RV0 is an RV which is always used in first transmission.

**[Table 2]**

| Tx number | 1 | 2 | 3 | 4 |
|---|---|---|---|---|
| 1^{st} RV combination | RV0 | RV2 | RV1 | RV3 |
| 2^{nd} RV combination | RV0 | RV2 | RV3 | RV1 |

According to table 2, there are 4 transmissions. In the 1^{st} RV combination, RV0 is selected for the 1^{st} Tx number and RV2 for the 2^{nd} Tx number, and so on. The selected RVs in the 3^{rd} and the 4^{th} Tx numbers are different respectively between the 1^{st} and the 2^{nd} RV combinations.

From a 5^{th} transmission Tx number, an RV set of Table 2 can be repeated, or data can be transmitted by defining a new fixed RV combination. In this case, even if the scheduling information for retransmission is transmitted and thus the coding rate is changed, data is transmitted according to the previously fixed RV set. Table 5 below shows RV combinations (i.e., 3^{rd} to 6^{th} RV combinations) when transmission is made 5 times or more.

**[Table 3]**

| Tx number | 1 | 2 | 3 | 4 | 5 | 6 | 7 | ... |
|---|---|---|---|---|---|---|---|---|
| 3^{rd} RV combination | RV0 | RV2 | RV1 | RV3 | RV0 | RV2 | RV1 | ... |
| 4^{th} RV combination | RV0 | RV2 | RV1 | RV3 | RV2 | RV1 | RV3 | ... |
| 5^{th} RV combination | RV0 | RV2 | RV3 | RV1 | RV0 | RV2 | RV3 | ... |
| 6^{th} RV combination | RV0 | RV2 | RV3 | RV1 | RV2 | RV3 | RV1 | ... |

Referring to Table 3, in a 3^{rd} RV combination, the 1^{st} RV combination of Table 1 above is repeated two times. In a 4^{th} RV combination, the 1^{st} RV combination of Table 1 above is repeated two times but an RV0 having systematic bits are excluded in the 2^{nd} repetition. In a 5^{th} RV combination, the 2^{nd} RV combination of Table 1 above is repeated two times. In a 6^{th} RV combination, the 2^{nd} RV combination of Table 1 above is repeated two times but an RV0 having systematic bits are excluded in the 2^{nd} repetition.

As such, a throughput can be improved when it is determined to transmit data of the circular buffer as fast as possible. The aforementioned fixed RV combination is for exemplary purposes only. Thus, the RV combination may change according to the Tx number.

For another example, an RV combination may be predetermined according to a coding rate, and thereafter when scheduling information for retransmission is transmitted, data using the HARQ may be transmitted by selecting an RV in consideration of a changed coding rate.

It will be assumed that the RV set is determined according to an initial coding rate (CR) as shown in Table 4.

**[Table 4]**

| coding rate | RV combination based on Tx number |
|---|---|
| 2/3≤CRO<1 | RVO->RV1->RV2->RV3 |
| 4/9≤CR1<2/3 | RVO->RV2->RV1->RV3 |
| 1/3≤CR2<4/9 | RVO->RV3->RV2->RV1 |

Referring to Table 4, a next RV is determined according to a previous RV. For example, if the previous RV is RV2 when data is transmitted with a coding rate of CR0, the next RV is RV3. Table 5 shows a method of RV selection in a case where a coding rate changes upon transmitting the scheduling information for retransmission when an RV combination is determined according to the coding rate as shown in Table 4 above.

**[Table 5]**

| Tx number | 1 | 2 | 3 | 4 |
|---|---|---|---|---|
| coding rate | CR0 | CR1 | CR1 | CR2 |
| RV | RV0 | RV1 | RV3 | RV0 |

Referring to Table 5, a 1^{st} Tx number has a coding rate of CR0, and thus first transmission is determined to RV0 according to Table 4 above. Since the coding rate changes to CR1 at a 2^{nd} Tx number, a next RV is determined to RV1. This is to regulate an amount of data according to the changed coding rate by selecting an RV immediately next to the latest RV at a time point where the coding rate changes.

The coding rate is maintained to CR1 at a 3^{rd} Tx number. Thus, an RV sequence is determined according to the RV combination based on CR1. Since the previous RV is RV1, the next RV is determined to RV3 according to Table 4 above. The coding rate changes to CR2 at a last 4^{th} Tx number. Thus, RV0, which is an RV next to RV 3, is selected again. As such, transmission efficiency can be improved by adaptively selecting an RV according to a previous RV and a coding rate.

The change of coding rate is just on example of a communication situation in which the method comprises selecting an RV immediately next to the previous transmitted RV, regardless of the currently used RV combination. Other predetermined communication situations, such as a change of modulation or the like, can trigger this embodiment.

In case of uplink transmission, a synchronous HARQ can be used to reduce a signaling overhead. In this case, the signaling overhead is reduced by using a predetermined RV. In addition, a throughput of HARQ can be improved.

Now, a signaling method of reporting a selected RV will be described.

In a synchronous HARQ, a time point at which transmitting/receiving ends transmit data is known. Therefore, if an RV sequence is clearly determined between the transmitting/receiving ends, signaling for RV is unnecessary. By considering this, a method of reporting an RV by using previous control information without additional signaling is required.

For example, a new data indicator (NDI) may be used to report an RV. When data blocks are transmitted, the NDI is signaling required to report whether a data block currently transmitted is a new data block. In this method, the RV is implicitly reported using the NDI instead of explicitly reporting the RV. Therefore, an overhead caused by additional RV signaling can be reduced.

Table 6 shows a method of selecting an RV according to a 1-bit NDI when the 3^{rd} RV combination of Table 3 is used. Herein, if the NDI is 1, it indicates new data transmission, whereas if the NDI of 0, it indicates retransmission. Of course, the other way around is also possible.

**[Table 6]**

| Tx number | | 1 | 2 | 3 | 4 | 5 | 6 | 7 | ... |
|---|---|---|---|---|---|---|---|---|---|
| 3^{rd} RV combination | NDI | 1 | 0 | 0 | 0 | 0 | 0 | 0 | ... |
| | RV | RV0 | RV2 | RV1 | RV3 | RV0 | RV2 | RV1 | ... |

Referring to Table 6, at a 1^{st} Tx number, the NDI is 1, which indicates new data. Since this is first transmission, data is transmitted using RV0. Thereafter, the NDI continuously indicates 0, which means retransmission. Therefore, the next RV for the 2^{nd} Tx number is determined to be RV2 by a previous RV(RV0) as in the 3^{rd} RV combination.

For another example, a retransmission sequence number (RSN) may be used to report an RV. In case of the synchronous HARQ, the time point at which the transmitting/receiving ends transmit data blocks is known. Thus, the RV can be reported using the RSN instead of the NDI. In this case, a specific value of the RSN is defined to indicate first transmission. If the RSN is 1-bit information, the RSN is either 0 or 1, wherein '0' indicates first transmission and '1' indicates retransmission.

If the RSN is 2-bit information, '0' indicates first transmission, and transmission is achieved according to an RSN in the sequence of '0->1->2->3'. After 4^{th} transmission, the RSN may continuously remain in '3'. Such a signaling method is used in the 3^{rd} generation partnership project (3GPP) high speed uplink packet access (HSUPA). The RSN is transmitted from a transmitter to a receiver.

Table 7 shows a method of selecting an RV according to a 1-bit RSN when the 4^{th} and 5^{th} RV combinations of Table 3 above are used.

**[Table 7]**

| Tx number | | 1 | 2 | 3 | 4 | 5 | 6 | 7 | ··· |
|---|---|---|---|---|---|---|---|---|---|
| 4^{th} RV combination | RSN | 0 | 1 | 1 | 1 | 1 | 1 | 1 | ... |
| | RV | RV0 | RV2 | RV1 | RV3 | RV2 | RV1 | RV3 | ... |
| 5^{th} RV combination | RSN | 0 | 1 | 1 | 1 | 1 | 1 | 1 | ... |
| | RV | RV0 | RV2 | RV1 | RV3 | RV0 | RV2 | RV1 | ... |

Referring to Table 7, the RSN is 0 at a 1^{st} Tx number, which indicates first transmission. The RSN is 1 throughout 2^{nd} to 7^{th} Tx numbers, which indicates retransmission. In this case, the RV may be determined according to the 4^{th} and 5^{th} RV combinations of Table 3 above.

As described above, the RSN is not always transmitted but transmitted only when scheduling information exists. Therefore, even if the RSN is not transmitted in the middle of transmission, the receiver has to use the RSN in consideration of this situation.

Table 8 shows a method of selecting an RV according to a 2-bit RSN when the 3^{rd} and 4^{th} RV combinations of Table 3 above are used.

**[Table 8]**

| Tx number | | 1 | 2 | 3 | 4 | 5 | 6 | 7 | ... |
|---|---|---|---|---|---|---|---|---|---|
| 3^{ra} RV combination | RSN | 0 | 1 | 2 | 3 | 3 | 3 | 3 | ... |
| | RV | RV0 | RV2 | RV1 | RV3 | RV0 | RV2 | RV1 | ... |
| 4^{th} RV combination | RSN | 0 | 1 | 2 | 3 | 1 | 2 | 3 | ... |
| | RV | RV0 | RV2 | RV1 | RV3 | RV2 | RV1 | RV3 | ... |

Referring to Table 8, when a 3^{rd} RV combination is used, if the RSN is 3, an actually transmitted RV may differ according to a Tx number. This has to be agreed in advance between the transmitter and the receiver. For example, a currently transmitted subframe number may be used. When a 4^{th} RV combination is used, the RSN and the transmitted RV have a 1:1 matching relation. Therefore, the RV can be known from the RSN included in scheduling information for retransmission. That is, when the RSN is represented in 2 bits, the RNS is transmitted in the form of 0, 1, 2, 3, 3, 3, 3, 3 ... or 0, 1, 2, 3, 1, 2, 3 ..., and an RV corresponding to each RSN is assigned.

However, there is a case where the scheduling information for retransmission is not transmitted. Thus, when there is no RNS, an RV to be used in retransmission can be selected and used differently according to an RV used in immediately previous transmission. Table 9 shows a method of selecting an RV in a case where there is no RSN since scheduling information for retransmission is not transmitted when the 3^{rd} and 4^{th} RV combinations of Table 3 above are used.

**[Table 9]**

| 3^{td} RV combination | | 4^{th} RV combination | |
|---|---|---|---|
| (i-1)^{th} RV | i^{th} RV | (i-1)^{th} | RV i^{th} RV |

| RV0 | RV2 | RV0 (only first transmission) | RV2(only first transmission) |
|---|---|---|---|
| RV1 | RV3 | RV1 | RV3 |
| RV2 | RV1 | RV2 | RV1 |
| RV3 | RV0 | RV3 | RV2 |

Referring to Table 9, in a 3^{rd} RV combination, in a case where an (i-1)^{th} RV is RV0 and there is no RSN since scheduling information for retransmission is not transmitted at an i^{th} Tx number, an i^{th} RV is selected to RV2, which is an RV next to RV0, according to a sequence of the 3^{rd} RV combination by considering a previous RV0. In addition, in a 4^{th} RV combination, in a case where an (i-1)^{th} RV is RV3 and there is no RSN since scheduling information for retransmission is not transmitted at an i^{th} Tx number, an i^{th} RV is selected to RV2, which is an RV next to RV3, according to a sequence of the 4^{th} RV combination by considering a previous RV3.

Next, a signaling method of explicitly reporting an RV is described. Table 10 below shows the signaling method of explicitly reporting the RV according to the 4^{th} RV combination of Table 3 above.

**[Table 10]**

| Tx number | | 1 | 2 | 3 | 4 | 5 | 6 | 7 |
|---|---|---|---|---|---|---|---|---|
| 4^{th} RV combination | RV value | 0 | 2 | 1 | 3 | 2 | 1 | 3 |
| | RV | RV0 | RV2 | RV1 | RV3 | RV2 | RV1 | RV3 |

All functions described above may be performed by a processor such as a microprocessor, a controller, a microcontroller, and an application specific integrated circuit (ASIC) according to software or program code for performing the functions. The program code may be designed, developed, and implemented on the basis of the descriptions of the present invention, and this is well known to those skilled in the art.

While the present invention has been particularly shown and described with reference to exemplary embodiments thereof, it will be understood by those skilled in the art that various changes in form and details may be made therein without departing from the spirit and scope of the invention as defined by the appended claims. The exemplary embodiments should be considered in descriptive sense only and not for purposes of limitation. Therefore, the scope of the invention is defined not by the detailed description of the invention but by the appended claims, and all differences within the scope will be construed as being included in the present invention.

## Claims

**1.** A method of transmitting data from a user terminal (10) to a base station (20) using a hybrid automatic repeat request (HARQ) scheme with a plurality of redundancy versions of said data, each of the redundancy versions (RV) indicating a transmission start position of a data block in a circular buffer, the method comprising, carried out in the user terminal:
performing a first transmission of the data using the HARQ scheme with a first redundancy version (RV0); and
performing at least one retransmission of the data using the HARQ scheme with various redundancy versions,
wherein the method further comprises, for each retransmission, determining the redundancy version to be used by considering the previously used redundancy version and a predetermined sequence, and wherein within one sequence, at least two redundancy versions following each other have non consecutive start positions.

**2.** The method of claim 1, wherein said sequence is cyclically used to perform repeated retransmissions.

**3.** The method of any one of claims 1 or 2, wherein the plurality of redundancy versions comprises four redundancy versions (RV0-RV3) with respectively four different start positions in the circular buffer.

**4.** The method of claim 3, wherein said sequence is formed of redundancy versions set in the following order, considering their start positions: the first (RV0), the third (RV2), the fourth (RV3) and the second (RV1) redundancy version.

**5.** The method of claim 3, wherein the redundancy version with the first start position (RV0) is used only for the first transmission and the retransmissions are performed using a sequence formed of redundancy versions set in the following order, considering their start positions: the third (RV2), the fourth (RV3) and the second (RV1) redundancy version.

**5.** The method of any one of claims 1 to 4, wherein one redundancy version (RV0) is specifically used for the first transmission.

**7.** The method of any one of claims 1 to 6, wherein the redundancy versions have all the same size and have start positions equidistantly separated in the circular buffer.

**8.** The method of any one of claims 1 to 7, further comprising, carried out in the user terminal:
receiving scheduling information from the base station;
selecting a redundancy version based on the scheduling information;
performing a transmission with the selected redundancy version; and
performing further retransmissions of the data using redundancy versions by considering the selected redundancy version and the predetermined sequence.

**9.** The method of claim 8, wherein the scheduling information comprises an indicator of the redundancy version to be selected.

**10.** The method of claim 8, wherein the scheduling information comprises an indicator of the current communication situation and a redundancy version with a start position immediately next to the start position of the last redundancy version transmitted is selected.

**11.** The method of claim 8, wherein the scheduling information comprises a new data indicator (NDI) and, upon reception, the user terminal performs a first transmission.

**12.** User terminal (UE) adapted for transmitting data using a hybrid automatic repeat request (HARQ) scheme with a plurality of redundancy versions of said data, each of the redundancy versions (RV) indicating a transmission start position of a data block in a circular buffer, the user terminal comprising a controller adapted for:
performing a first transmission of the data using the HARQ scheme with a first redundancy version; and
performing at least one retransmission of the data using the HARQ scheme with various redundancy versions,
wherein, the controller is further adapted for determining, for each retransmission, the redundancy version to be used by considering the previously used redundancy version and a predetermined sequence, and wherein within one sequence, at least two redundancy versions following each other have non consecutive start positions.

**13.** User terminal according to claim 12, wherein the user terminal is further adapted to carry out the method of any one of claims 1 to 11.

**14.** Base station (BS) adapted for transmitting data using a hybrid automatic repeat request (HARQ) scheme with a plurality of redundancy versions of said data, each of the redundancy versions (RV) indicating a transmission start position of a data block in a circular buffer, the base station comprising a controller adapted for:
performing a first transmission of the data using the HARQ scheme with a first redundancy version; and
performing at least one retransmission of the data using the HARQ scheme with various redundancy versions,
wherein, the controller is further adapted for determining, for each retransmission, the redundancy version to be used by considering the previously used redundancy version and a predetermined sequence, and wherein within one sequence, at least two redundancy versions following each other have non consecutive start positions.

**15.** Data transmission system using a hybrid automatic repeat request (HARQ) scheme with a plurality of redundancy versions of said data for data transmission between a base station and at least one user terminal, wherein the user terminal is a user terminal according to claim 12 and the base station is a base station according to claim 14.
